(19) Europäisches Patentamt
European Patent Office
Office européen des brevets

(11) **EP 4 661 135 A1**

(12) **EUROPEAN PATENT APPLICATION**

(43) Date of publication:
**10.12.2025 Bulletin 2025/50**

(21) Application number: **25164454.8**

(22) Date of filing: **18.03.2025**

(51) International Patent Classification (IPC):
**H01M 10/0525** (2010.01)    **H01M 10/0567** (2010.01)
**H01M 10/0568** (2010.01)    **H01M 10/0569** (2010.01)
**H01M 4/02** (2006.01)    **H01M 4/525** (2010.01)

(52) Cooperative Patent Classification (CPC):
**H01M 4/525; H01M 10/0525; H01M 10/0567;
H01M 10/0568; H01M 10/0569;** H01M 2004/027;
H01M 2004/028; H01M 2300/0025; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2024 CN 202410364781**

(71) Applicant: **Ningde Amperex Technology Ltd.
Ningde City, Fujian Province 352100 (CN)**

(72) Inventors:
• **WANG, Kefei
Ningde City, Fujian Province, China, 352100 (CN)**
• **ZHUANG, Ruirui
Ningde City, Fujian Province, China, 352100 (CN)**

(74) Representative: **Icosa
83 avenue Denfert-Rochereau
75014 Paris (FR)**

(54) **NONAQUEOUS ELECTROLYTE SOLUTION, LITHIUM-ION BATTERY, AND ELECTRONIC DEVICE**

(57) A nonaqueous electrolyte solution includes a nonaqueous solvent and a lithium salt. The nonaqueous electrolyte solution comprises a specific amount of ethylene carbonate, propylene carbonate, 1,2,3-tris(2-cyanoethoxy)propane, and a boron-containing lithium salt additive. An aggregate mass percentage of the ethylene carbonate and the 1,2,3-tris(2-cyanoethoxy)propane in the nonaqueous electrolyte solution is set to fall within a specific range. An aggregate mass percentage of the propylene carbonate and the boron-containing lithium salt additive is set to fall within a specific range. The nonaqueous electrolyte solution put into use not only alleviates the volume resistance of the positive electrode and the lithium plating on the negative electrode of the lithium-ion battery, but also enables the battery to well exert high-temperature cycling performance at 65 °C or above and low-temperature output performance at -20 °C or below in a balanced way.

EP 4 661 135 A1

## Description

### TECHNICAL FIELD

This application relates to the field of energy storage, and in particular, to a nonaqueous electrolyte solution, a lithium-ion battery, and an electronic device.

### BACKGROUND

In recent years, information-related devices or communication devices (small devices such as personal computers and mobile phones), large devices such as power storage systems used in applications requiring a high energy density, electric vehicles, hybrid electric vehicles, auxiliary power supplies for fuel cell vehicles, and power storage equipment, as well as power storage systems used in energy-requiring applications have attracted significant attention. As one of the energy candidates for such devices, batteries with a nonaqueous electrolyte solution such as lithium-ion batteries and sodium-ion batteries have been actively developed.

Among the batteries with a nonaqueous electrolyte solution, there are many types of batteries that have been put into practical use, but the performance of the batteries are still not satisfactory in various applications. In particular, for use in vehicles such as electric vehicles, relatively high input-output performance of the battery are still required even in cold seasons. Therefore, it is important to improve low-temperature performance. When the battery is repeatedly charged and discharged in a high-temperature environment, the increase in the internal resistance of the battery needs to be reduced to improve the high-temperature cycling performance of the lithium-ion battery.

To improve the low-temperature performance and charge-and-discharge performance (cycling performance) of the batteries with a nonaqueous electrolyte solution, research has long focused on the optimization of various battery components, primarily the active materials of the positive electrode and the negative electrode. Similarly, technologies related to nonaqueous electrolyte solutions are also developing, and it has been put forward that various additives are used to suppress the deterioration caused by the decomposition of the nonaqueous electrolyte solutions on the surfaces of the active materials of the positive and negative electrodes.

### SUMMARY

In a battery that uses a nonaqueous electrolyte solution as disclosed in the prior art, the durability of the battery at high temperature and the output performance of the battery at low temperature are not satisfactory concurrently, and still need to be improved.

The applicant hereof investigates the above problem deeply and discloses a nonaqueous electrolyte solution in which a lithium salt is dissolved in a nonaqueous solvent. The nonaqueous electrolyte solution contains a specific amount of ethylene carbonate, propylene carbonate, 1,2,3-tris(2-cyanoethoxy)propane, and a boron-containing lithium salt additive. The aggregate mass percentage of the ethylene carbonate and the 1,2,3-tris(2-cyanoethoxy)propane in the nonaqueous electrolyte solution is set to fall within a specific range. The aggregate mass percentage of the propylene carbonate and the boron-containing lithium salt additive is set to fall within a specific range. The nonaqueous electrolyte solution put into use not only alleviates the volume resistance of the positive electrode and lithium plating on the negative electrode of the lithium-ion battery, but also enables the battery to well exert high-temperature cycling performance at 65 °C or above and low-temperature output performance at -20 °C or below in a balanced way, thereby achieving the objectives of this application.

In other words, this application provides the following (1) to (3):

(1) A nonaqueous electrolyte solution in which a lithium salt is dissolved in a nonaqueous solvent, where, based on a total mass of the nonaqueous electrolyte solution, the nonaqueous electrolyte solution contains:

(I) ethylene carbonate at a mass percentage of 8 wt% to 20 wt%;

(II) propylene carbonate at a mass percentage of 8 wt% to 20 wt%;

(III) 1,2,3-tris(2-cyanoethoxy)propane at a mass percentage of 0.7 wt% to 5 wt%; and

(IV) a boron-containing lithium salt additive at a mass percentage of 0.01 wt% to 3 wt%, where

The aggregate mass percentage of the ethylene carbonate and the 1,2,3-tris(2-cyanoethoxy)propane is 10.5 wt% to 22.5 wt%, and the aggregate mass percentage of the propylene carbonate and the boron-containing lithium salt additive is 8.05 wt% to 20.05 wt%.

(2) A lithium-ion battery, comprising a positive electrode, a negative electrode, and a nonaqueous electrolyte solution in which an electrolyte salt is dissolved in a nonaqueous solvent, where the nonaqueous electrolyte solution is the above nonaqueous electrolyte solution; the positive electrode includes lithium cobalt oxide containing at least three of elements aluminum, magnesium, titanium, zirconium, lanthanum, iridium, cerium, or tungsten; or, the negative electrode includes at least 1 selected from lithium metal, a lithium alloy, a lithiation- and delithiation-enabled carbon material, elemental tin, a tin compound, elemental silicon, a silicon oxygen compound, a silicon carbon compound, or a lithium titanium oxide compound as a negative active material.

(3) An electronic device, where the electronic device includes the above lithium-ion battery.

The nonaqueous electrolyte solution put into use not only alleviates the volume resistance of the positive electrode and the lithium plating on the negative electrode of the lithium-ion battery, but also enables the battery to well exert high-temperature cycling performance at 65 °C or above and low-temperature output performance at -20 °C or below in a balanced way.

## DETAILED DESCRIPTION

Some embodiments of this application will be described in detail below. No embodiment of this application is to be construed as a limitation on this application. Unless otherwise expressly specified, the following terms used herein convey the meanings defined below.

### Nonaqueous electrolyte solution

This application provides a nonaqueous electrolyte solution for use in a lithium-ion battery, in which a lithium salt is dissolved in a nonaqueous solvent. Based on the total mass of the nonaqueous electrolyte solution, the nonaqueous electrolyte solution contains:

(I) ethylene carbonate at a mass percentage of 8 wt% to 20 wt%;
(II) propylene carbonate at a mass percentage of 8 wt% to 20 wt%;
(III) 1,2,3-tris(2-cyanoethoxy)propane at a mass percentage of 0.7 wt% to 5 wt%; and
(IV) a boron-containing lithium salt additive at a mass percentage of 0.01 wt% to 3 wt%, where

The aggregate mass percentage of the ethylene carbonate and the 1,2,3-tris(2-cyanoethoxy)propane is 10.5 wt% to 22.5 wt%, and the aggregate mass percentage of the propylene carbonate and the boron-containing lithium salt additive is 8.05 wt% to 20.05 wt%.

The nonaqueous electrolyte solution contains: (I) ethylene carbonate, (II) propylene carbonate, (III) 1,2,3-tris(2-cyanoethoxy)propane, and (IV) a boron-containing lithium salt additive. Especially, the aggregate mass percentage of the ethylene carbonate and the 1,2,3-tris(2-cyanoethoxy)propane in the nonaqueous electrolyte solution is set to fall within a specific range. The aggregate mass percentage of the propylene carbonate and the boron-containing lithium salt additive is set to fall within a specific range. A stable coating is formed on the surface of the positive electrode by the reaction between the constituents of the materials (I) to (IV) and the active species on the surface of the positive electrode during charging of the 1st cycle. The coating layer suppresses the detachment of oxygen from the positive electrode structure, reduces the transition metal-oxygen species formed on the surface of the positive electrode and the precipitation of the transition metal on the surface of the negative electrode. As a result, by suppressing the increase in resistance on the electrode interface, this application not only improves the resistance performance during high-temperature cycling, but also improves the low-temperature discharge performance, and suppresses the lithium plating on the negative electrode after initial charging and discharging.

Particularly, the (IV) boron-containing lithium salt additive is at least one selected from lithium tetrafluoroborate, lithium difluoro(oxalato)borate, lithium bis(oxalato)borate, lithium tetracyanoborate, lithium tetrakis(trifluoromethyl)borate, lithium (trifluoromethyl)trifluoroborate, lithium bis(trifluoromethyl)difluoroborate, lithium pentafluoroethyl trifluoroborate, lithium dicyano(oxalato)borate, lithium bismalonate borate, lithium (2-fluoromalonate)difluoroborate, lithium malonate(oxalato)borate, lithium bis(salicylate)borate, lithium bis(catecholato)borate, lithium methoxytricyanoborate, lithium ethoxytricyanoborate, lithium tetramethoxyborate, lithium tetraethoxyborate, lithium tetrakis(trifluoromethoxy)borate, lithium tetrakis(2,2,2-trifluoroethoxy)borate, lithium tetra(hydroquinone-oxy)borate, dilithium bis(trifluoroborate)sulfate, lithium difluoroborate, lithium methanedisulfonate difluoroborate, lithium difluorophosphoryloxy trifluoroborate, lithium bis(difluorophosphoryloxy)difluoroborate, or lithium tetrakis(difluorophosphoryloxy)borate. The resultant coating is of excellent stability, and therefore, the performance of the battery is further enhanced. There may be 1 type or at least 2 types of (IV) boron-containing lithium salt additives.

Specifically, with a view to improving the resistance performance during high-temperature cycling of the lithium-ion battery, based on the total mass of the nonaqueous electrolyte solution, the mass percentage of the ethylene carbonate is at least 8 wt%. Preferably, the mass percentage of the ethylene carbonate is at least 8.5 wt%, preferably at least 9 wt%, and more preferably at least 9.5%.

In addition, with a view to reducing the positive electrode resistance, as an upper limit of the mass percentage of the ethylene carbonate, the mass percentage of the ethylene carbonate is at most 20 wt%, preferably at most 19 wt%, more preferably at most 17 wt%, further preferably at most 15.5 wt%, and extraordinarily preferably at most 13.5 wt%.

In some embodiments, the mass percentage of the ethylene carbonate is set to a1 wt%, where a1 is 8.5, 9, 9.5, 10.5, 11, 11.5, 12, 12.5, 13, 13.5, 14, 14.5, 15, 15.5, 16, 16.5, 17, 17.5, 18, 18.5, 19, 20, or a value falling within a range formed by any two thereof. For example, the range is 8.5 to 16.6, 9 to 17.5, 10.5 to 15.5, 11 to 16.5, 11.5 to 17.5, 12 to 18, 11 to 16.5, 11 to 13.5, 12 to 15.5, 12 to 20, 12.5 to 16.5, 13 to 17.5, 13.5 to 18.5, 14 to 16.5, 14.5 to 19, 15.5 to 18.5, 16 to 19, 16.5 to 19, 17.5 to 20, or 18 to 20. When the mass percentage of the ethylene carbonate falls within the above range, the volume resistance of the positive electrode and the output performance of the secondary battery are further improved.

Specifically, with a view to improving the low-temperature discharge capacity of the lithium-ion battery, based on the total mass of the nonaqueous electrolyte solution, the mass percentage of the 1,2,3-tris(2-cyanoethoxy)propane is at least 0.7 wt%, preferably at least 0.8 wt%, and more preferably at least 1.2%.

In addition, with a view to improving the low-temperature discharge capacity of the lithium-ion battery, as an upper limit of the mass percentage of the 1,2,3-tris(2-cyanoethoxy)propane, the mass percentage of the 1,2,3-tris(2-cyanoethoxy)propane is at most 5 wt%, preferably at most 4.9 wt%, more preferably at most 4.1 wt%, further preferably at most 3.6 wt%, and extraordinarily preferably at most 2.7 wt%.

In some embodiments, the mass percentage of the 1,2,3-tris(2-cyanoethoxy)propane is set to a3 wt%, where a3 is 0.7, 0.8, 0.9, 1, 1.2, 1.5, 1.6, 2, 2.1, 2.5, 2.7, 3, 3.5, 3.6, 4.1, 4.9, 5, or a value falling within a range formed by any two thereof. For example, the range is 0.7 to 1.2, 0.8 to 3.5, 0.9 to 1.6, 0.9 to 1.5, 1 to 1.6, 1.2 to 2.7, 1.5 to 2.7, 1.6 to 4.1, 2 to 3.5, 2 to 5, 1.2 to 3, 1.6 to 2.7, 3.5 to 4.9, 0.9 to 3, 0.8 to 2.1, 1.2 to 3.5, 0.7 to 2.7, 1.5 to 3, 1.2 to 1.6, or 2 to 4.1. When the mass percentage falls within the above range, the low-temperature discharge capacity is further improved.

Further, with a view to reducing the positive electrode resistance, based on the total mass of the nonaqueous electrolyte solution, the aggregate mass percentage of the ethylene carbonate and the 1,2,3-tris(2-cyanoethoxy)propane is at least 10.5 wt%, and preferably at least 11.5 wt%.

Moreover, with a view to reducing the positive electrode resistance, the aggregate mass percentage of the ethylene carbonate and the 1,2,3-tris(2-cyanoethoxy)propane is at most 22.5 wt%, and preferably at most 21.5 wt% as an upper limit.

In some embodiments, the aggregate mass percentage of the ethylene carbonate and the 1,2,3-tris(2-cyanoethoxy)propane is set to (a1+a3) wt%, where (a1+a3) is 10.5, 11, 11.5, 12, 13, 14, 15, 16, 17, 18, 19.5, 21.5, 22.5, or a value falling within a range formed by any two thereof. For example, the range is 10.5 to 18, 11 to 17, 11 to 15, 11.5 to 19.5, 12 to 18, 13 to 17, 11 to 16, 13 to 19.5, 14 to 21.5, 15 to 22.5, or 18 to 22.5. When the aggregate mass percentage falls within the above range, the positive electrode resistance is further reduced, and the electrochemical performance in a low-temperature environment are improved.

Specifically, with a view to reducing the lithium plating rate, based on the total mass of the nonaqueous electrolyte solution, the mass percentage of the propylene carbonate is at least 8 wt%, preferably at least 9 wt%, and more preferably at least 10.7 wt%.

In addition, with a view to suppressing the lithium plating on the negative electrode, the mass percentage of the propylene carbonate is at most 20 wt%, preferably at most 19.5 wt%, more preferably at most 18.9 wt%, further preferably at most 17.8 wt%, and extraordinarily preferably at most 15.7 wt%.

In some embodiments, the mass percentage of the propylene carbonate is set to a2 wt%, where a2 is 8.5, 9, 9.2, 9.5, 10.7, 11, 11.5, 12, 12.5, 12.9, 13.6, 14, 14.5, 15.7, 16, 16.6, 17, 17.8, 18.5, 18.9, 19, 19.5, or a value falling within a range formed by any two thereof. For example, the range is 8.5 to 17.8, 9 to 18.9, 9.2 to 14.5, 9.5 to 19.5, 11.5 to 17.8, 11.5 to 16.6, 13.6 to 18.5, 13.6 to 17.8, 14 to 18.9, 15.7 to 19.5, or 12 to 17.8. When the mass percentage falls within the above range, the lithium plating on the negative electrode is further suppressed.

Specifically, with a view to improving the resistance performance during high-temperature cycling of the lithium-ion battery, based on the total mass of the nonaqueous electrolyte solution, the mass percentage of the boron-containing lithium salt additive is at least 0.01 wt%. Preferably, the mass percentage of the boron-containing lithium salt additive is at least 0.03 wt%, preferably at least 0.07 wt%, and more preferably at least 0.12 wt%.

In addition, with a view to improving the resistance performance during high-temperature cycling of the lithium-ion battery, as an upper limit of the mass percentage of the boron-containing lithium salt additive, the mass percentage of the boron-containing lithium salt additive is at most 3 wt%, preferably at most 2.5 wt%, more preferably at most 2.1 wt%, further preferably at most 1.8 wt%, and extraordinarily preferably at most 1.2 wt%.

In some embodiments, the mass percentage of the boron-containing lithium salt additive is set to a4 wt%, where a4 is 0.01, 0.03, 0.05, 0.07, 0.08, 0.1, 0.12, 0.15, 0.19, 0.21, 0.27, 0.3, 0.35, 0.4, 0.45, 0.51, 0.6, 0.7, 0.79, 0.9, 1, 1.2, 1.5, 1.8, 2, 2.5, 3, or a value falling within a range formed by any two thereof. For example, the range is 0.01 to 0.12, 0.02 to 0.21, 0.1 to 0.45, 0.51 to 2, 0.6 to 3, 1.2 to 2.5, 0.1 to 0.8, 0.79 to 1.8, 1.5 to 3, 0.12 to 0.45, or 0.35 to 0.79. When the mass percentage falls within the above range, the resistance performance during high-temperature cycling is improved.

Further, with a view to suppressing the lithium plating on the negative electrode, based on the total mass of the nonaqueous electrolyte solution, the aggregate mass percentage of the propylene carbonate and the boron-containing lithium salt additive is at least 8.05 wt%, and preferably at least 8.55 wt%.

Moreover, with a view to suppressing the lithium plating on the negative electrode, the aggregate mass percentage of the propylene carbonate and the boron-containing lithium salt additive is at most 20.05 wt%, and preferably at most 19.55 wt% as an upper limit.

In some embodiments, the aggregate mass percentage of the propylene carbonate and the boron-containing lithium salt additive is set to (a2+a4) wt%, where a2+a4 is 8.05, 8.55, 9.05, 10.5, 10.75, 11, 11.5, 12, 12.95, 13, 13.65, 14, 14.5, 15, 15.75, 16, 16.5, 17, 17.85, 18, 18.5, 18.95, 19, 19.55, 20.05, or a value falling within a range formed by any two thereof. For example, the range is 8.05 to 18, 10.75 to 17, 11 to 15, 11.5 to 19.55, 12 to 18.5, 13 to 17.85, 11 to 16, 13 to 19.55, 14 to 18.5, 15 to 19, or 16 to 20.05. When the mass percentage falls within the above range, the lithium plating on the negative electrode is further alleviated, and the resistance performance during high-temperature cycling of the lithium-ion battery is improved.

In addition, the nonaqueous electrolyte solution may further include other nitrile compounds. The applicant hereof has also unexpectedly discovered that other nitrile compounds can reduce the impedance of the coating formed by the reaction between the above-mentioned materials (I) to (IV) and the active species on the surface of the positive electrode, facilitate the charge transfer of lithium ions, and improve the resistance performance during high-temperature cycling and low-temperature performance.

The other nitrile compounds include at least one of succinonitrile, adiponitrile, ethylene glycol bis(propionitrile) ether, 1,3,5-pentanetricarbonitrile, 1,2,3-propanetricarbonitrile, 1,3,6-hexanetricarbonitrile, 1,2,6-hexanetricarbonitrile, 1,2,4-tris(2-cyanoethoxy)butane, 1,1,1-tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

There may be 1 type or at least 2 types of other nitrile compounds. For example, other nitrile compounds include succinonitrile and adiponitrile; or succinonitrile and ethylene glycol bis(propionitrile)ether; or adiponitrile and ethylene glycol bis(propionitrile)ether; or succinonitrile and 1,3,6-hexanetricarbonitrile; or adiponitrile and 1,3,6-hexanetricarbonitrile; or ethylene glycol bis(propionitrile)ether and 1,3,6-hexanetricarbonitrile.

Specifically, with a view to improving the low-temperature performance and the resistance performance during high-temperature cycling of the lithium-ion battery, based on the total mass of the nonaqueous electrolyte solution, the mass percentage of other nitrile compounds is at least 0.3 wt%. Preferably, the mass percentage of other nitrile compounds is at least 0.6 wt%, preferably at least 0.9 wt%, and more preferably at least 1.4 wt%.

In addition, with a view to suppressing the lithium plating on the negative electrode and improving the low-temperature output and the resistance performance during high-temperature cycling of the lithium-ion battery, as an upper limit of the mass percentage of other nitrile compounds, the mass percentage of other nitrile compounds is at most 8 wt%, preferably at most 7.9 wt%, more preferably at most 7.1 wt%, further preferably at most 6.2 wt%, and extraordinarily preferably at most 5.3 wt%.

In some embodiments, the total mass percentage of other nitrile compounds is b wt%, where b is 0.3, 0.35, 0.4, 0.45, 0.5, 0.6, 0.7, 0.8, 0.9, 1, 1.4, 1.5, 2, 2.5, 3, 3.5, 3.9, 4, 4.6, 5.3, 6.2, 7.1, 7.9, 8, or a value falling within a range formed by any two thereof. For example, the range is 0.3 to 5.3, 0.6 to 4.6, 0.9 to 3.9, 0.4 to 2, 0.45 to 4.6, 0.8 to 2.5, 1.4 to 3.9, 2.5 to 8, 0.9 to 6.2, 0.45 to 5.3, or 0.6 to 1.4. When the total mass percentage falls within the above range, the lithium plating on the negative electrode is alleviated, and the low-temperature discharge capacity and the resistance performance during high-temperature cycling are improved.

In addition, the nonaqueous electrolyte solution may further include other additives. The applicant hereof has also unexpectedly discovered that other additives can suppress the decomposition and regeneration of the coating during charging and discharging, where the coating is formed by the reaction between the above-mentioned materials (I) to (IV) and the active species on the surface of the positive electrode, thereby further reducing the positive electrode resistance and improving the low-temperature performance.

The other additives include at least one of fluoroethylene carbonate, vinylene carbonate, lithium difluorophosphate, lithium fluorosulfonate, 1,3-propane sultone, 1,3-propene sultone, ethylene sulfate, 1,3-propylene glycol cyclosulfate, fluorobenzene, cyclohexylbenzene, biphenyl, tris(trimethylsilyl)phosphate, or tris(trimethylsilyl)borate.

There may be 1 type or at least 2 types of other additives. For example, the other additives include lithium difluorophosphate and lithium fluorosulfonate; or lithium difluorophosphate and fluoroethylene carbonate; or lithium difluorophosphate and 1,3-propane sultone; or lithium fluorosulfonate and 1,3-propene sultone; or ethylene sulfate and 1,3-propane sultone; or tris(trimethylsilyl)phosphate and lithium difluorophosphate; or tris(trimethylsilyl)borate and lithium difluorophosphate.

Specifically, with a view to reducing the positive electrode resistance and improving the low-temperature output performance, based on the total mass of the nonaqueous electrolyte solution, the mass percentage of other additives is at least 0.3 wt%. Preferably, the mass percentage of other additives is at least 0.9 wt%, preferably at least 1.6 wt%, and more preferably at least 2.8 wt%.

In addition, with a view to reducing the positive electrode resistance and improving the low-temperature output performance, the mass percentage of other additives is at most 10 wt%, preferably at most 9.7 wt%, more preferably at most 8.2 wt%, further preferably at most 7.1 wt%, and extraordinarily preferably at most 6.7 wt%.

In some embodiments, the total mass percentage of other additives is c wt%, where c is 0.3, 0.35, 0.4, 0.45, 0.5, 0.6, 0.7, 0.8, 0.9, 1, 1.5, 1.6, 2, 2.5, 2.8, 3, 3.5, 3.9, 4, 4.5, 5, 5.5, 6, 6.5, 7.1, 7.5, 8.2, 8.6, 9, 9.3, 9.7, 10, or a value falling within a range formed by any two thereof. For example, the range is 0.3 to 18.2, 0.45 to 7.5, 0.6 to 9.7, 5.5 to 9.7, 6 to 8.6, 2.8 to 6.5, 1 to 6.5, 0.7 to 7.1, 1.5 to 9.3, 0.45 to 3.9, or 0.7 to 4.5. When the total mass percentage falls within the above range, the positive electrode resistance is further reduced, and the low-temperature output performance is improved.

The lithium salt used in the nonaqueous electrolyte solution of this application includes lithium hexafluorophosphate. Based on the total mass of the nonaqueous electrolyte solution, the mass percentage of the lithium hexafluorophosphate is 9 to 15 wt%, preferably 9 to 13 wt%, and more preferably 9 to 12 wt%. With the mass percentage falling within the above range, the resistance performance during high-temperature cycling can be exerted and the low-temperature performance can be improved in a more balanced manner.

The nonaqueous electrolyte solution of this application may further include a nonaqueous solvent known in the prior art for use as a solvent of a nonaqueous electrolyte solution. For example, the nonaqueous solvent is cyclic carbonate ester, chain carbonate ester, cyclic carboxylate, chain carboxylate, cyclic ether, chain ether, a phosphorus-containing organic solvent, or a sulfur-containing organic solvent. Preferably, the nonaqueous solvent is chain carboxylate ester such as ethyl acetate, ethyl fluoroacetate, ethyl propionate, or propyl propionate.

**Lithium-ion battery**

The lithium-ion battery of this application includes a positive electrode, a negative electrode, and the above-mentioned nonaqueous electrolyte solution in which a lithium salt is dissolved in a nonaqueous solvent. The components such as the positive electrode and the negative electrode other than the nonaqueous electrolyte solution may be used without particular limitation.

For example, the positive active material used in the lithium-ion battery may be a composite metal oxide that is compounded by lithium and 1 or at least 2 of cobalt, manganese, or nickel, or may be a lithium-containing olivine phosphate salt containing one or at least two of iron, cobalt, or manganese. 1 of such positive active materials may be used alone, or at least 2 thereof may be used in combination.

Examples of such lithium composite metal oxides may be, as appropriate, at least 1 of, and more preferably at least 2 of: $LiCoO_2$, $LiMn_2O_4$, $LiNiO_2$, $LiCo_{1-x}Ni_xO_2$ ($0.01 < x < 1$), $LiNi_xMn_yCo_zO_2$ ($x + y + z = 1$), a solid solution of $Li_2MnO_3$ and $LiMO_2$ (M is a transition metal such as Co, Ni, Mn, or Fe), $LiNi_{1/2}Mn_{3/2}O_4$, $LiFePO_4$, $LiMnPO_4$, and $LiMn_{1-x}Fe_xPO_4$ ($0.01 < x < 1$). A part of the lithium composite metal oxides or lithium-containing olivine phosphate salts may be substituted by other elements; or, a part of the cobalt, nickel, manganese, or iron in the positive active material may be substituted by one or at least two of the elements Co, Mn, Ni, Mg, Al, B, Ti, V, Nb, Cu, Zn, Mo, Ca, Sr, W, and Zr; or, the positive active material may be coated with a compound containing such other elements or coated with a carbon material.

For example, the positive electrode includes lithium cobalt oxide containing at least three of aluminum, magnesium, titanium, zirconium, lanthanum, iridium, cerium, or tungsten as doping elements. With a view to improving the resistance performance during high-temperature cycling of the lithium-ion battery, based on the mass of the lithium cobalt oxide, the mass percentage of any one of the doping elements is preferably at least 0.01 wt%, preferably at least 0.03 wt%, and more preferably at least 0.05 wt%. In addition, as an upper limit of the mass percentage of the doping elements, the mass percentage of any one of the doping elements is at most 1 wt%, preferably at most 0.5 wt%, more preferably at most 0.3 wt%, further preferably at most 0.15 wt%, and extraordinarily preferably at most 0.1 wt%.

If a lithium composite metal oxide that operates at a high charge voltage is used, the electrochemical performance tend to deteriorate in a high-temperature environment due to a reaction with the nonaqueous electrolyte solution during charging. However, in the lithium-ion battery disclosed in this application, the deterioration of the electrochemical performance can be suppressed.

With a view to increasing the voltage during charging, the positive electrode potential is preferably 4.4 V (vs Li/Li$^+$) or higher, more preferably 4.5 V (vs Li/Li$^+$) or higher, and extraordinarily preferably 4.6 V (vs Li/Li$^+$) or higher.

The conductive agent of the positive electrode is not particularly limited as long as the conductive agent is an electronic conductive material that does not cause chemical changes. Examples of the conductive agent include graphites such as natural graphite (flake graphite, and the like) and artificial graphite, and carbon blacks such as acetylene black, Ketjen black, channel black, furnace black, lamp black, or thermal black. In addition, the graphite and the carbon black may be appropriately mixed for use as the conductive agent. The content of the conductive agent in the positive electrode composite is preferably 1 to 10 wt%, and extraordinarily preferably 1.5 to 5 wt%.

The positive electrode may be prepared by the following method: mixing the above-mentioned positive active material with a conductive agent such as acetylene black and carbon black, and a binder such as polytetrafluoroethylene, polyvinylidene fluoride, polyacrylonitrile, poly(styrene-co-butadiene), and carboxymethyl cellulose; adding a high-boiling solvent such as 1-methyl-2-pyrrolidone into the mixture; and kneading the mixture to form a positive electrode composite slurry; and then applying the slurry onto current collector aluminum foil; drying and pressing the slurry to form a positive electrode composite layer to make a positive electrode.

The density of the positive electrode except the current collector is typically 3.5 $g/cm^3$ or more, preferably 3.8 $g/cm^3$ or more, more preferably 4 $g/cm^3$ or more, and further preferably 4.1 $g/cm^3$ or more in order to further increase the capacity of the battery. In addition, as an upper limit, the density is preferably at most 4.6 $g/cm^3$.

As a negative active material for use in a lithium-ion battery, 1 of the following negative active materials may be used alone, or at least 2 thereof may be used in combination: lithium metal or lithium alloy, and lithiation- and delithiation-enabled carbon material [highly graphitizable carbon, hardly graphitizable carbon with a (002) plane spacing of at least 0.37 nm, graphite with a (002) plane spacing of at most 0.34 nm, or the like], (elemental) tin, a tin compound such as $SnO_x$ ($1 \leq x < 2$), (elemental) silicon, a silicon oxygen compound such as $SiO_x$ ($1 \leq x < 2$), a silicon carbon compound, a lithium titanium oxide compound such as $Li_4Ti_5O_{12}$, and the like.

Among such negative active materials, in terms of the ability to intercalate and deintercalate lithium ions, the negative active material is preferably a highly crystalline carbon material such as artificial graphite or natural graphite, and further preferably a carbon material of a graphitic crystal structure in which the plane spacing (d002) of the lattice plane (002) is at most 0.340 nm, especially 0.335 to 0.337 nm. With a view to increasing the energy density, the negative active material is preferably a silicon oxygen compound, a silicon carbon compound, or a mixture of the silicon oxygen compound or silicon carbon compound and graphite.

If the ratio of the peak intensity $I_{(110)}$ of the (110) plane to the peak intensity $I_{(004)}$ of the (004) plane of the graphite crystal of the negative electrode plate, denoted as $I_{(110)}/I_{(004)}$ and determined by X-ray diffractometry, is 0.01 or higher after the negative electrode plate is pressed until the density of the negative electrode plate except the current collector is at least 1.5 $g/cm^3$, the electrochemical performance in a low-temperature environment are further improved. More preferably, the ratio is 0.05 or higher, and further preferably 0.1 or higher. In addition, sometimes due to excessive treatment, the crystallinity is reduced and the discharge capacity of the battery is reduced, the upper limit of the peak intensity ratio $I_{(110)}/I_{(004)}$ is preferably 0.5, and more preferably 0.3.

Furthermore, if the highly crystalline carbon material (core material) is coated with a carbon material of a lower crystallinity than the core material, the electrochemical performance in a low-temperature environment is further improved. Therefore, the high-crystallinity carbon material coated with the low-crystallinity carbon material is preferred. The crystallinity of the coated carbon material may be confirmed by transmission electron microscopy (TEM).

If a high-crystallinity carbon material is used, the carbon material reacts with the nonaqueous electrolyte solution during charging, and there is a tendency for the electrochemical performance at low or high temperature to deteriorate due to an increase in interface resistance. However, in the lithium-ion battery disclosed in this application, the electrochemical performance at low temperature become good.

The negative electrode may be prepared by the following method: kneading the conductive agent, binder, and high-boiling solvent that are the same as those used in the preparation of the positive electrode, so as to form a negative electrode composite slurry, and then applying the slurry onto current collector copper foil and the like, and then drying and pressing the slurry to form a negative electrode composite layer to make a negative electrode.

The density of the negative electrode except the current collector is typically 1.1 $g/cm^3$ or higher, preferably 1.5 $g/cm^3$ or higher, and more preferably 1.7 $g/cm^3$ or higher in order to further increase the capacity of the battery. In addition, as an upper limit, the density is preferably at most 2.2 $g/cm^3$.

The structure of the lithium battery is not particularly limited, and may be a coin battery, a cylindrical battery, a prismatic battery, a pouch battery, or the like containing a single layer of separator or a plurality of layers of separators.

The separator for use in the battery is not particularly limited, but may be a single-layer or laminated microporous film, woven fabric, or nonwoven fabric of polyolefin such as polypropylene or polyethylene.

The uses of the lithium-ion battery of this application are not particularly limited, and the lithium-ion battery may be used in any electronic device known in the prior art. In some embodiments, the lithium-ion battery of this application is applicable to, but not limited to use in, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes preparation of the lithium-ion battery with reference to specific embodiments. A person skilled in the art understands that the preparation methods described in this application are merely examples, and any other appropriate preparation methods still fall within the scope of this application.

**Embodiments**

Some embodiments of the nonaqueous electrolyte solution of this application are illustrated below, but this application is not limited to such embodiments.

**Preparing a lithium-ion battery**

The positive active material in Table 1-1 at a mass percentage of 97 wt% and acetylene black at a mass percentage of 1.5 wt% are mixed. The mixture is added into a prepared solution obtained by dissolving 1.5 wt% polyacrylonitrile in 1-methyl-2-pyrrolidone. The mixture is stirred to make a positive electrode composite slurry. The positive electrode composite slurry is applied to one side of aluminum foil (current collector), dried, pressed, and then cut into a specified size to make a positive electrode. The density of the positive electrode except the current collector is 4.15 g/cm$^3$.

In addition, the negative active material in Table 1-1 at a mass percentage of 96 wt% and styrene-butadiene rubber at a mass percentage of 2 wt% are mixed. The mixture is added into a prepared solution obtained by dissolving 2 wt% carboxymethyl cellulose in deionized water. The mixture is stirred to make a negative electrode composite slurry. The negative electrode composite slurry is applied to one side of copper foil (current collector), dried, pressed, and then cut into a specified size to make a negative electrode. The density of the negative electrode except the current collector is 1.6 g/cm$^3$.

The above-prepared positive electrode and negative electrode are connected to a conducting wire separately. A 10 $\mu$m-thick polypropylene porous film is placed between the positive electrode plate and the negative electrode plate, and then the electrode plates are stacked together with the film. In addition, the LiPF$_6$ that supports the electrolyte is dissolved in a solution containing: (I) ethylene carbonate, (II) propylene carbonate, (III) 1,2,3-tris(2-cyanoethoxy)propane, (IV) a boron-containing lithium salt additive, and a propionate ester, other nitrile compounds, and other additives. Based on the total mass of the nonaqueous electrolyte solution being 100 wt%, the mass percentage and constituents of the materials (I) to (IV), other nitrile compounds, and other additives are shown in Table 1 and Table 2. The mass percentage of LiPF$_6$ is 14%. The rest is propyl propionate and ethyl propionate (mass ratio 2.3: 1).

Subsequently, the stacked structure and 3.2 grams of electrolyte solution are accommodated together in an aluminum laminated housing. The opening of the housing is heat-sealed, and the steps such as chemical formation and capacity grading are performed to make a lithium-ion battery. The lithium-ion battery is in a pouch shape that is 35 mm in width, 48 mm in height, and 5 mm in thickness. Table 1 shows reference signs of the positive and negative electrode materials and some constituents of the electrolyte solution of the prepared lithium-ion battery. The detailed constituents are shown in Tables 1-1, 1-2, and 1-3, respectively.

**Table 1**

|  | Positive electrode | Negative electrode | Boron-containing lithium salt | Other nitrile compounds | Other additives |
|---|---|---|---|---|---|
| Embodiment 1 | Positive electrode 1 | Negative electrode 1 | B1 | None | None |
| Embodiment 2 | Positive electrode 1 | Negative electrode 1 | B1 | None | None |
| Embodiment 3 | Positive electrode 1 | Negative electrode 1 | B1 | None | None |
| Embodiment 4 | Positive electrode 1 | Negative electrode 1 | B1 | None | None |
| Embodiment 5 | Positive electrode 1 | Negative electrode 1 | B2 | None | None |
| Embodiment 6 | Positive electrode 1 | Negative electrode 2 | B2 | None | None |
| Embodiment 7 | Positive electrode 1 | Negative electrode 2 | B2 | None | None |
| Embodiment 8 | Positive electrode 1 | Negative electrode 2 | B2 | None | None |

(continued)

| | Positive electrode | Negative electrode | Boron-containing lithium salt | Other nitrile compounds | Other additives |
|---|---|---|---|---|---|
| Embodiment 9 | Positive electrode 1 | Negative electrode 2 | B2 | None | None |
| Embodiment 10 | Positive electrode 2 | Negative electrode 2 | B2 | None | None |
| Embodiment 11 | Positive electrode 2 | Negative electrode 3 | B3 | None | None |
| Embodiment 12 | Positive electrode 2 | Negative electrode 3 | B3 | None | None |
| Embodiment 13 | Positive electrode 2 | Negative electrode 3 | B3 | None | None |
| Embodiment 14 | Positive electrode 2 | Negative electrode 3 | B3 | None | None |
| Embodiment 15 | Positive electrode 2 | Negative electrode 3 | B3 | None | None |
| Embodiment 16 | Positive electrode 2 | Negative electrode 3 | B3 | None | None |
| Embodiment 17 | Positive electrode 2 | Negative electrode 3 | B3 | None | None |
| Embodiment 18 | Positive electrode 2 | Negative electrode 3 | B3 | None | None |
| Embodiment 19 | Positive electrode 2 | Negative electrode 4 | B4 | None | None |
| Embodiment 20 | Positive electrode 3 | Negative electrode 4 | B4 | None | None |
| Embodiment 21 | Positive electrode 3 | Negative electrode 4 | B4 | None | None |
| Embodiment 22 | Positive electrode 3 | Negative electrode 4 | B4 | None | None |
| Embodiment 23 | Positive electrode 3 | Negative electrode 4 | B4 | None | None |
| Embodiment 24 | Positive electrode 3 | Negative electrode 4 | B4 | None | None |
| Embodiment 25 | Positive electrode 3 | Negative electrode 4 | B4 | None | None |
| Embodiment 26 | Positive electrode 3 | Negative electrode 4 | B4 | None | None |
| Embodiment 27 | Positive electrode 3 | Negative electrode 4 | B4 | None | None |
| Embodiment 28 | Positive electrode 4 | Negative electrode 4 | B5 | None | None |
| Embodiment 29 | Positive electrode 4 | Negative electrode 4 | B5 | None | None |
| Embodiment 30 | Positive electrode 4 | Negative electrode 4 | B5 | None | None |

(continued)

| | Positive electrode | Negative electrode | Boron-containing lithium salt | Other nitrile compounds | Other additives |
|---|---|---|---|---|---|
| Embodiment 31 | Positive electrode 4 | Negative electrode 4 | B5 | None | None |
| Embodiment 32 | Positive electrode 4 | Negative electrode 4 | B5 | None | None |
| Embodiment 33 | Positive electrode 4 | Negative electrode 4 | B5 | None | None |
| Embodiment 34 | Positive electrode 4 | Negative electrode 5 | B7 | None | None |
| Embodiment 35 | Positive electrode 4 | Negative electrode 5 | B8 | None | None |
| Embodiment 36 | Positive electrode 5 | Negative electrode 5 | B9 | None | None |
| Embodiment 37 | Positive electrode 5 | Negative electrode 5 | B10 | None | None |
| Embodiment 38 | Positive electrode 5 | Negative electrode 5 | B11 | None | None |
| Embodiment 39 | Positive electrode 5 | Negative electrode 5 | B12 | None | None |
| Embodiment 40 | Positive electrode 5 | Negative electrode 5 | B5 | None | None |
| Embodiment 41 | Positive electrode 6 | Negative electrode 5 | B6 | None | None |
| Embodiment 42 | Positive electrode 6 | Negative electrode 5 | B6 | None | None |
| Embodiment 43 | Positive electrode 6 | Negative electrode 5 | B6 | None | None |
| Embodiment 44 | Positive electrode 6 | Negative electrode 6 | B6 | None | None |
| Embodiment 45 | Positive electrode 6 | Negative electrode 6 | B6 | None | None |
| Embodiment 46 | Positive electrode 6 | Negative electrode 6 | B6 | None | None |
| Embodiment 47 | Positive electrode 6 | Negative electrode 6 | B6 | None | None |
| Embodiment 48 | Positive electrode 6 | Negative electrode 6 | B6 | None | None |
| Embodiment 49 | Positive electrode 6 | Negative electrode 6 | B1(0.5) + B2(0.7) | None | None |
| Embodiment 50 | Positive electrode 6 | Negative electrode 6 | B1(1) + B3(0.8) | None | None |
| Embodiment 51 | Positive electrode 6 | Negative electrode 6 | B1(1.5) + B4(0.6) | None | None |
| Embodiment 52 | Positive electrode 6 | Negative electrode 6 | B1(1) + B5(1.5) | None | None |

(continued)

| | Positive electrode | Negative electrode | Boron-containing lithium salt | Other nitrile compounds | Other additives |
|---|---|---|---|---|---|
| Embodiment 53 | Positive electrode 6 | Negative electrode 6 | B1(1.5) + B6(1.4) | None | None |
| Embodiment 54 | Positive electrode 1 | Negative electrode 1 | B2(1) + B3(2) | None | None |
| Embodiment 55 | Positive electrode 1 | Negative electrode 2 | B3 | N1 | None |
| Embodiment 56 | Positive electrode 1 | Negative electrode 3 | B3 | N2 | None |
| Embodiment 57 | Positive electrode 1 | Negative electrode 4 | B3 | N3 | None |
| Embodiment 58 | Positive electrode 2 | Negative electrode 5 | B3 | N4 | None |
| Embodiment 59 | Positive electrode 3 | Negative electrode 6 | B3 | N5 | None |
| Embodiment 60 | Positive electrode 4 | Negative electrode 1 | B3 | N6 | None |
| Embodiment 61 | Positive electrode 4 | Negative electrode 2 | B3 | N1(2.3) + N2(2.3) | None |
| Embodiment 62 | Positive electrode 4 | Negative electrode 3 | B2 | N1(3) + N3(2.3) | None |
| Embodiment 63 | Positive electrode 4 | Negative electrode 4 | B2 | N1(4) + N4(2.2) | None |
| Embodiment 64 | Positive electrode 4 | Negative electrode 5 | B2 | N2(5) + N3(2.1) | None |
| Embodiment 65 | Positive electrode 4 | Negative electrode 6 | B2 | N2(6) + N4(1.9) | None |
| Embodiment 66 | Positive electrode 4 | Negative electrode 1 | B2 | N3(4) + N4(4) | None |
| Embodiment 67 | Positive electrode 4 | Negative electrode 2 | B2 | None | $C_1$ |
| Embodiment 68 | Positive electrode 4 | Negative electrode 3 | B2 | None | $C_2$ |
| Embodiment 69 | Positive electrode 5 | Negative electrode 4 | B2 | None | C3 |
| Embodiment 70 | Positive electrode 5 | Negative electrode 5 | B3 | None | C4 |
| Embodiment 71 | Positive electrode 5 | Negative electrode 6 | B3 | None | C5 |
| Embodiment 72 | Positive electrode 5 | Negative electrode 1 | B3 | None | C6 |
| Embodiment 73 | Positive electrode 6 | Negative electrode 2 | B3 | None | C7 |
| Embodiment 74 | Positive electrode 6 | Negative electrode 3 | B3 | None | C8 |

(continued)

| | Positive electrode | Negative electrode | Boron-containing lithium salt | Other nitrile compounds | Other additives |
|---|---|---|---|---|---|
| Embodiment 75 | Positive electrode 6 | Negative electrode 4 | B3 | None | C9 |
| Embodiment 76 | Positive electrode 6 | Negative electrode 5 | B1 | None | C10 |
| Embodiment 77 | Positive electrode 6 | Negative electrode 6 | B2 | None | C11 |
| Embodiment 78 | Positive electrode 6 | Negative electrode 1 | B3 | None | C12 |
| Embodiment 79 | Positive electrode 1 | Negative electrode 2 | B4 | N4 | C1(0.3) + C3(2.9) |
| Embodiment 80 | Positive electrode 2 | Negative electrode 3 | B5 | N4 | C1(0.5) + C3(4.3) |
| Embodiment 81 | Positive electrode 3 | Negative electrode 4 | B6 | N1 | C2(0.5) + C3(4.7) |
| Embodiment 82 | Positive electrode 4 | Negative electrode 5 | B3 | N2 | C1(0.1) + C2(0.4) + C3(3) |
| Embodiment 83 | Positive electrode 4 | Negative electrode 6 | B3 | N3 | C1(0.1) + C3(0.7) + C4(3) |
| Embodiment 84 | Positive electrode 4 | Negative electrode 1 | B2 | N4 | C1(0.1) + C3(3) + C5(1.1) |
| Embodiment 85 | Positive electrode 4 | Negative electrode 2 | B2 | N4 | C1(0.7) + C2(1.2) + C5(3) |
| Embodiment 86 | Positive electrode 4 | Negative electrode 3 | B2 | N4 | C1(1) + C2(2.1) + C6(2) |
| Embodiment 87 | Positive electrode 4 | Negative electrode 4 | B2 | N1(4) + N2(2.8) | C1(1) + C3(3) + C6(1.9) |
| Embodiment 88 | Positive electrode 4 | Negative electrode 5 | B2 | N1(5) + N3(2.1) | C1(1) + C2(1) + C3(3) + C6(1.2) |
| Embodiment 89 | Positive electrode 4 | Negative electrode 6 | B2 | N1(2) + N2(1) + N3(0.6) | C1(0.3) + C2(1) + C3(2) + C4(3.4) |
| Embodiment 90 | Positive electrode 5 | Negative electrode 1 | B2 | N2(1) + N3(2) + N4(0.8) | C1(1.5) + C3(5.6) |
| Embodiment 91 | Positive electrode 6 | Negative electrode 2 | B3 | N1(1) + N3(1) + N4(0.4) | C1(2) + C4(5.8) |
| Embodiment 92 | Positive electrode 6 | Negative electrode 3 | B3 | N3(1) + N2(0.9) | C1(1) + C3(7) |
| Embodiment 93 | Positive electrode 6 | Negative electrode 4 | B3 | N1(1.2) + N2(0.4) | C5(3.6) + C3(5) |
| Embodiment 94 | Positive electrode 6 | Negative electrode 5 | B3 | N1(0.5) + N4(0.7) | C1 (0.7) |
| Embodiment 95 | Positive electrode 6 | Negative electrode 6 | B3 | N3 | C1 (0.3) |
| Embodiment 96 | Positive electrode 6 | Negative electrode 1 | B3 | N2 | C1(0.3) + C9(2.9) |

(continued)

|  | Positive electrode | Negative electrode | Boron-containing lithium salt | Other nitrile compounds | Other additives |
|---|---|---|---|---|---|
| Embodiment 97 | Positive electrode 6 | Negative electrode 1 | B3 | N1 | C1(0.3) + C10(4.5) |
| Comparative Embodiment 1 | Positive electrode 1 | Negative electrode 1 | B1 | None | None |
| Comparative Embodiment 2 | Positive electrode 1 | Negative electrode 1 | B2 | None | None |
| Comparative Embodiment 3 | Positive electrode 1 | Negative electrode 1 | B3 | None | None |
| Comparative Embodiment 4 | Positive electrode 1 | Negative electrode 1 | B4 | None | None |
| Comparative Embodiment 5 | Positive electrode 1 | Negative electrode 1 | B1 | None | None |
| Comparative Embodiment 6 | Positive electrode 1 | Negative electrode 1 | B1 | None | None |
| Comparative Embodiment 7 | Positive electrode 1 | Negative electrode 1 | B1 | None | None |
| Comparative Embodiment 8 | Positive electrode 1 | Negative electrode 1 | B1 | None | None |
| In the table above, each numerical value in () is a weight percentage (wt%). | | | | | |

**Table 1-1 Positive electrode**

| Serial number | Constituent |
|---|---|
| Positive electrode 1 | Lithium cobalt oxide, containing 0.45 wt% aluminum + 0.1 wt% magnesium + 0.08 wt% titanium |
| Positive electrode 2 | Lithium cobalt oxide, containing 0.45 wt% aluminum + 0.12 wt% magnesium + 0.08 wt% zirconium |
| Positive electrode 3 | Lithium cobalt oxide, containing 0.45 wt% aluminum + 0.12 wt% magnesium + 0.1 wt% lanthanum |
| Positive electrode 4 | Lithium cobalt oxide, containing 0.4 wt% aluminum + 0.15 wt% magnesium + 0.1 wt% iridium |
| Positive electrode 5 | Lithium cobalt oxide, containing 0.4 wt% aluminum + 0.15 wt% magnesium + 0.1 wt% tungsten |
| Positive electrode 6 | Lithium cobalt oxide, containing 0.5 wt% aluminum + 0.15 wt% magnesium + 0.1 wt% cerium |

**Table 1-2 Negative electrode**

| Serial number | Constituent |
|---|---|
| Negative electrode 1 | Artificial graphite |
| Negative electrode 2 | Artificial graphite + natural graphite (mass ratio 90: 10) |
| Negative electrode 3 | Artificial graphite + silicon-carbon compound (mass ratio 90: 10) |
| Negative electrode 4 | Artificial graphite + silicon-carbon compound (mass ratio 95: 5) |
| Negative electrode 5 | Artificial graphite + silicon-oxygen compound (mass ratio 90: 10) |
| Negative electrode 6 | Artificial graphite + hard carbon (mass ratio 90: 10) |

**Table 1-3 Electrolyte solution**

| Reference sign | Name of material | Reference sign | Name of material |
|---|---|---|---|
| B1 | Lithium tetrafluoroborate | C1 | Lithium difluorophosphate |
| B2 | Lithium difluoro(oxalato)borate | C2 | Vinylene carbonate |
| B3 | Lithium bis(oxalato)borate | C3 | Fluoroethylene carbonate |
| B4 | Lithium tetracyanoborate | C4 | Lithium fluorosulfonate |
| B5 | Lithium tetramethoxyborate | C5 | 1,3-propane sultone |
| B6 | Lithium tetrakis(2,2,2-trifluoroethoxy) borate | C6 | Ethylene sulfate |
| B7 | Lithium bis(trifluoromethyl)difluoroborate | C7 | Fluorobenzene |
| B8 | Lithium dicyano(oxalato)borate | C8 | Biphenyl |
| B9 | Dilithium bis(trifluoroborate)sulfate | C9 | Tris(trimethylsilyl)phosphat e |
| B10 | Lithium malonate(oxalato)borate | C10 | Tris(trimethylsilyl)borate |
| B11 | Lithium tetraethoxyborate | C11 | 1,3-propylene glycol cyclosulfate |
| B12 | Lithium bis(difluorophosphoryloxy)difluo roborate | C12 | Cyclohexylbenzene |
| N1 | Succinonitrile | N7 | 1,3,5-pentanetricarbonitrile |
| N2 | Adiponitrile | N8 | 1,2,3-propanetricarbonitrile |
| N3 | Ethylene glycol bis(propionitrile)ether | N9 | 1,2,6-tris(cyanoethoxy)hexane |
| N4 | 1,3,6-hexanetricarbonitrile | N10 | 1,2,4-tris(2-cyanoethoxy)butane |
| N5 | 1,1,1-tris(cyanoethoxy methylene) ethane | N11 | 1,1,1-tris(cyanoethoxy methylene) propane |
| N6 | 1,2,5-tris(cyanoethoxy)pentane | N12 | 3-methyl-1,3,5-tris(cyanoethoxy)pentane |

**Test Methods**

**Positive electrode resistance**

After the lithium-ion battery obtained in each embodiment and comparative embodiment is disassembled, the positive electrode is die-cut into a circular shape with a diameter of 12 mm. The circular specimen of the positive electrode is pressed under a pressure of 2 kN at 25 °C by using a tensile compression tester (model SV-301NA, manufactured by IMADA SEISAKUSHO Co., Ltd.) and an electrochemical measuring device (model HSV-110, manufactured by HOKUTO DENKO Corporation). A current of 10 mA is applied. 10 minutes later, the voltage value is read, and the volume resistance of the positive electrode is measured. Evaluation is performed based on the following criteria:

A:

$$\text{resistance} \leq 200 \ \Omega \cdot \text{cm}$$

B:

$$200 \ \Omega \cdot \text{cm} < \text{resistance} \leq 300 \ \Omega \cdot \text{cm}$$

C:

$$300 \ \Omega \cdot \text{cm} < \text{resistance} \leq 400 \ \Omega \cdot \text{cm}$$

D:

$$resistance > 400\ \Omega \cdot cm$$

**Lithium plating rate on the surface of the negative electrode**

The lithium-ion battery obtained in each embodiment and comparative embodiment is fully charged at a constant current of 1C at a temperature of -20 °C, that is, the state of charge (SoC) is 100%. In addition, the fully charged battery is disassembled. The negative electrode is taken out. The status of the surface of the negative electrode composite layer is observed. Subsequently, the area of the lithium precipitated on the surface of the negative electrode composite layer is measured. The lithium plating rate on the surface of the negative electrode is calculated as: lithium plating rate = (area of precipitated lithium/area of the surface of the negative electrode composite layer) $\times$ 100 (%). Afterward, the evaluation is performed based on the following criteria. The lower the lithium plating rate on the surface of the negative electrode, the more the lithium plating on the surface of the negative electrode is suppressed during charging.

A:

$$Lithium\ plating\ rate < 6\%$$

B:

$$6\% \leq lithium\ plating\ rate < 10\%$$

C:

$$10\% \leq lithium\ plating\ rate < 15\%$$

D:

$$15\% \leq lithium\ plating\ rate$$

**Low-temperature output performance**

The lithium-ion battery obtained in each embodiment and comparative embodiment is charged at a constant current (CC), and then at a constant voltage (CV), at a temperature of 25 °C until the voltage reaches 4.5 V to prepare a battery cell. The prepared battery cell is discharged at a temperature of -20 °C at a constant current of 0.2C and 1C separately until the voltage reaches 3.0 V, and then the discharge capacity at this time is determined. Subsequently, the discharge capacity ratio is calculated as: discharge capacity ratio = (discharge capacity measured at the end of 1C cycling/discharge capacity measured at the end of 0.2C cycling) $\times$ 100 (%), representing the discharge capacity retention rate. Such measurement steps are performed on five battery cells to obtain five discharge capacity retention rates. The average value of the discharge capacity retention rates is used as the output performance, and are evaluated based on the following criteria. The larger the value, the more excellent the output performance.

A:

$$85\% \leq average\ value\ of\ discharge\ capacity\ retention\ rate$$

B:

$$80\% \leq average\ value\ of\ discharge\ capacity\ retention\ rate < 85\%$$

C:

$$75\% \leq average\ value\ of\ discharge\ capacity\ retention\ rate < 80\%$$

D:

$$\text{Average value of discharge capacity retention rate} < 75\%$$

**Resistance rise during high-temperature cycling test**

The lithium-ion battery obtained in each embodiment or comparative embodiment is tightened by applying a specific pressure of 1 MPa with a pressurizing jig, and then a cycling test is carried out at 65 °C. The conditions of the cycling test are set as: charging at a constant current of 1C (until a voltage of 4.5 V) and a constant voltage (until a cut-off current of 1/50C), and discharging at a constant current of 1C (until a cut-off voltage of 3.0 V). The charge-and-discharge cycles are repeated 500 times. Subsequently, the tightened state of the pressurizing jig is maintained. The temperature is lowered to 25 °C, and the output performance are measured in the same way as in the <Output performance> described above. The resistance retention rates (%) before and after the cycling are calculated as: resistance retention rate = (discharge capacity retention rate after the cycling test/discharge capacity retention rate before the cycling test) × 100. Evaluation is performed based on the following criteria. The greater the resistance retention rate after the cycling versus before the cycling, the smaller the resistance rise during the cycling test.

A:

$$85\% \leq \text{resistance retention rate}$$

B:

$$80\% \leq \text{resistance retention rate} < 85\%$$

C:

$$70\% \leq \text{resistance retention rate} < 80\%$$

D:

$$\text{Resistance retention rate} < 70\%$$

In Table 2, a1 represents the mass percentage of (I) ethylene carbonate, a2 represents the mass percentage of (II) propylene carbonate, a3 represents the mass percentage of (III) 1,2,3-tris(2-cyanoethoxy)propane, a4 represents the total mass percentage of (IV) boron-containing lithium salt additives, b represents the total mass percentage of other nitrile compounds, and c represents the total mass percentage of other additives.

**Table 2**

| | a1 | a3 | a2 | a4 | al+a3 | a2+a4 | b | c | Volume resistance | Lithium plating rate | Low-temperature output | High-temperature cycling |
|---|---|---|---|---|---|---|---|---|---|---|---|---|
| Embodiment 1 | 8 | 2.5 | 12.5 | 0.05 | 10.5 | 12.55 | 0 | 0 | C | B | B | B |
| Embodiment 2 | 8.5 | 2.5 | 12.5 | 0.05 | 11 | 12.55 | 0 | 0 | B | B | B | B |
| Embodiment 3 | 9 | 2.5 | 12.5 | 0.05 | 11.5 | 12.55 | 0 | 0 | B | B | B | B |
| Embodiment 4 | 9.5 | 2.5 | 12.5 | 0.05 | 12 | 12.55 | 0 | 0 | B | B | B | B |
| Embodiment 5 | 10.5 | 2.5 | 12.5 | 0.05 | 13 | 12.55 | 0 | 0 | B | B | B | B |
| Embodiment 6 | 11.5 | 2.5 | 12.5 | 0.05 | 14 | 12.55 | 0 | 0 | B | B | B | B |
| Embodiment 7 | 12.5 | 2.5 | 12.5 | 0.05 | 15 | 12.55 | 0 | 0 | B | B | B | B |
| Embodiment 8 | 13.5 | 2.5 | 12.5 | 0.05 | 16 | 12.55 | 0 | 0 | B | B | B | B |
| Embodiment 9 | 15.5 | 2.5 | 12.5 | 0.05 | 18 | 12.55 | 0 | 0 | B | B | B | B |
| Embodiment 10 | 17 | 2.5 | 12.5 | 0.05 | 19.5 | 12.55 | 0 | 0 | B | B | B | B |
| Embodiment 11 | 19 | 2.5 | 12.5 | 0.05 | 21.5 | 12.55 | 0 | 0 | B | B | B | B |
| Embodiment 12 | 20 | 2.5 | 12.5 | 0.05 | 22.5 | 12.55 | 0 | 0 | C | B | B | B |
| Embodiment 13 | 12.5 | 2.5 | 8 | 0.05 | 15 | 8.05 | 0 | 0 | B | C | B | B |
| Embodiment 14 | 12.5 | 2.5 | 8.5 | 0.05 | 15 | 8.55 | 0 | 0 | B | B | B | B |
| Embodiment 15 | 12.5 | 2.5 | 9 | 0.05 | 15 | 9.05 | 0 | 0 | B | B | B | B |
| Embodiment 16 | 12.5 | 2.5 | 10.7 | 0.05 | 15 | 10.75 | 0 | 0 | B | B | B | B |
| Embodiment 17 | 12.5 | 2.5 | 12.9 | 0.05 | 15 | 12.95 | 0 | 0 | B | B | B | B |
| Embodiment 18 | 12.5 | 2.5 | 13.6 | 0.05 | 15 | 13.65 | 0 | 0 | B | B | B | B |
| Embodiment 19 | 12.5 | 2.5 | 15.7 | 0.05 | 15 | 15.75 | 0 | 0 | B | B | B | B |
| Embodiment 20 | 12.5 | 2.5 | 17.8 | 0.05 | 15 | 17.85 | 0 | 0 | B | B | B | B |
| Embodiment 21 | 12.5 | 2.5 | 18.9 | 0.05 | 15 | 18.95 | 0 | 0 | B | B | B | B |
| Embodiment 22 | 12.5 | 2.5 | 19.5 | 0.05 | 15 | 19.55 | 0 | 0 | B | B | B | B |
| Embodiment 23 | 12.5 | 2.5 | 20 | 0.05 | 15 | 20.05 | 0 | 0 | B | C | B | B |
| Embodiment 24 | 12.5 | 0.7 | 15.7 | 0.05 | 13.2 | 15.75 | 0 | 0 | B | B | C | B |
| Embodiment 25 | 12.5 | 0.8 | 15.7 | 0.05 | 13.3 | 15.75 | 0 | 0 | B | B | B | B |

17

| | a1 | a3 | a2 | a4 | al+a3 | a2+a4 | b | c | Volume resistance | Lithium plating rate | Low-temperature output | High-temperature cycling |
|---|---|---|---|---|---|---|---|---|---|---|---|---|
| Embodiment 26 | 12.5 | 0.9 | 15.7 | 0.05 | 13.4 | 15.75 | 0 | 0 | B | B | B | B |
| Embodiment 27 | 12.5 | 1.2 | 15.7 | 0.05 | 13.7 | 15.75 | 0 | 0 | B | B | B | B |
| Embodiment 28 | 12.5 | 1.6 | 15.7 | 0.05 | 14.1 | 15.75 | 0 | 0 | B | B | B | B |
| Embodiment 29 | 12.5 | 2.1 | 15.7 | 0.05 | 14.6 | 15.75 | 0 | 0 | B | B | B | B |
| Embodiment 30 | 12.5 | 2.7 | 15.7 | 0.05 | 15.2 | 15.75 | 0 | 0 | B | B | B | B |
| Embodiment 31 | 12.5 | 3.6 | 15.7 | 0.05 | 15.1 | 15.75 | 0 | 0 | B | B | B | B |
| Embodiment 32 | 12.5 | 4.1 | 15.7 | 0.05 | 16.6 | 15.75 | 0 | 0 | B | B | B | B |
| Embodiment 33 | 12.5 | 4.9 | 15.7 | 0.05 | 17.4 | 15.75 | 0 | 0 | B | B | B | B |
| Embodiment 34 | 12.5 | 5 | 15.7 | 0.05 | 17.5 | 15.75 | 0 | 0 | B | B | C | B |
| Embodiment 35 | 12.5 | 2.1 | 15.7 | 0.01 | 14.6 | 15.71 | 0 | 0 | B | B | B | C |
| Embodiment 36 | 12.5 | 2.1 | 15.7 | 0.02 | 14.6 | 15.72 | 0 | 0 | B | B | B | B |
| Embodiment 37 | 12.5 | 2.1 | 15.7 | 0.03 | 14.6 | 15.73 | 0 | 0 | B | B | B | B |
| Embodiment 38 | 12.5 | 2.1 | 15.7 | 0.07 | 14.6 | 15.77 | 0 | 0 | B | B | B | B |
| Embodiment 39 | 12.5 | 2.1 | 15.7 | 0.08 | 14.6 | 15.78 | 0 | 0 | B | B | B | B |
| Embodiment 40 | 12.5 | 2.1 | 15.7 | 0.12 | 14.6 | 15.82 | 0 | 0 | B | B | B | B |
| Embodiment 41 | 12.5 | 2.1 | 15.7 | 0.15 | 14.6 | 15.85 | 0 | 0 | B | B | B | B |
| Embodiment 42 | 12.5 | 2.1 | 15.7 | 0.19 | 14.6 | 15.89 | 0 | 0 | B | B | B | B |
| Embodiment 43 | 12.5 | 2.1 | 15.7 | 0.21 | 14.6 | 15.91 | 0 | 0 | B | B | B | B |
| Embodiment 44 | 12.5 | 2.1 | 15.7 | 0.27 | 14.6 | 15.97 | 0 | 0 | B | B | B | B |
| Embodiment 45 | 12.5 | 2.1 | 15.7 | 0.35 | 14.6 | 16.05 | 0 | 0 | B | B | B | B |
| Embodiment 46 | 12.5 | 2.1 | 15.7 | 0.51 | 14.6 | 16.21 | 0 | 0 | B | B | B | B |
| Embodiment 47 | 12.5 | 2.1 | 15.7 | 0.79 | 14.6 | 16.49 | 0 | 0 | B | B | B | B |
| Embodiment 48 | 12.5 | 2.1 | 15.7 | 0.92 | 14.6 | 16.62 | 0 | 0 | B | B | B | B |
| Embodiment 49 | 12.5 | 2.1 | 15.7 | 1.2 | 14.6 | 16.9 | 0 | 0 | B | B | B | B |
| Embodiment 50 | 12.5 | 2.1 | 15.7 | 1.8 | 14.6 | 17.5 | 0 | 0 | B | B | B | B |

EP 4 661 135 A1

| | a1 | a3 | a2 | a4 | al+a3 | a2+a4 | b | c | Volume resistance | Lithium plating rate | Low-temperature output | High-temperature cycling |
|---|---|---|---|---|---|---|---|---|---|---|---|---|
| Embodiment 51 | 12.5 | 2.1 | 15.7 | 2.1 | 14.6 | 17.8 | 0 | 0 | B | B | B | B |
| Embodiment 52 | 12.5 | 2.1 | 15.7 | 2.5 | 14.6 | 18.2 | 0 | 0 | B | B | B | B |
| Embodiment 53 | 12.5 | 2.1 | 15.7 | 2.9 | 14.6 | 18.6 | 0 | 0 | B | B | B | B |
| Embodiment 54 | 12.5 | 2.1 | 15.7 | 3 | 14.6 | 18.7 | 0 | 0 | B | B | B | C |
| Embodiment 55 | 12.5 | 2.1 | 15.7 | 0.05 | 14.6 | 15.75 | 0.3 | 0 | B | B | A | A |
| Embodiment 56 | 12.5 | 2.1 | 15.7 | 0.05 | 14.6 | 15.75 | 0.6 | 0 | B | A | A | A |
| Embodiment 57 | 12.5 | 2.1 | 15.7 | 0.05 | 14.6 | 15.75 | 0.9 | 0 | B | A | A | A |
| Embodiment 58 | 12.5 | 2.1 | 15.7 | 0.05 | 14.6 | 15.75 | 1.4 | 0 | B | A | A | A |
| Embodiment 59 | 12.5 | 2.1 | 15.7 | 0.05 | 14.6 | 15.75 | 2.8 | 0 | B | A | A | A |
| Embodiment 60 | 12.5 | 2.1 | 15.7 | 0.05 | 14.6 | 15.75 | 3.9 | 0 | B | A | A | A |
| Embodiment 61 | 12.5 | 2.1 | 15.7 | 0.05 | 14.6 | 15.75 | 4.6 | 0 | B | A | A | A |
| Embodiment 62 | 12.5 | 2.1 | 15.7 | 0.05 | 14.6 | 15.75 | 5.3 | 0 | B | A | A | A |
| Embodiment 63 | 12.5 | 2.1 | 15.7 | 0.05 | 14.6 | 15.75 | 6.2 | 0 | B | A | A | A |
| Embodiment 64 | 12.5 | 2.1 | 15.7 | 0.05 | 14.6 | 15.75 | 7.1 | 0 | B | A | A | A |
| Embodiment 65 | 12.5 | 2.1 | 15.7 | 0.05 | 14.6 | 15.75 | 7.9 | 0 | B | A | A | A |
| Embodiment 66 | 12.5 | 2.1 | 15.7 | 0.05 | 14.6 | 15.75 | 8 | 0 | B | A | B | A |
| Embodiment 67 | 12.5 | 2.1 | 15.7 | 0.05 | 14.6 | 15.75 | 0 | 0.3 | A | B | A | B |
| Embodiment 68 | 12.5 | 2.1 | 15.7 | 0.05 | 14.6 | 15.75 | 0 | 0.9 | A | A | A | B |
| Embodiment 69 | 12.5 | 2.1 | 15.7 | 0.05 | 14.6 | 15.75 | 0 | 1.6 | A | A | A | B |
| Embodiment 70 | 12.5 | 2.1 | 15.7 | 0.05 | 14.6 | 15.75 | 0 | 2.8 | A | A | A | B |
| Embodiment 71 | 12.5 | 2.1 | 15.7 | 0.05 | 14.6 | 15.75 | 0 | 3.9 | A | A | A | B |
| Embodiment 72 | 12.5 | 2.1 | 15.7 | 0.05 | 14.6 | 15.75 | 0 | 4.6 | A | A | A | B |
| Embodiment 73 | 12.5 | 2.1 | 15.7 | 0.05 | 14.6 | 15.75 | 0 | 5.3 | A | A | A | B |
| Embodiment 74 | 12.5 | 2.1 | 15.7 | 0.05 | 14.6 | 15.75 | 0 | 6.7 | A | A | A | B |
| Embodiment 75 | 12.5 | 2.1 | 15.7 | 0.05 | 14.6 | 15.75 | 0 | 7.1 | A | A | A | B |

(continued)

| | a1 | a3 | a2 | a4 | a1+a3 | a2+a4 | b | c | Volume resistance | Lithium plating rate | Low-temperature output | High-temperature cycling |
|---|---|---|---|---|---|---|---|---|---|---|---|---|
| Embodiment 76 | 12.5 | 2.1 | 15.7 | 0.05 | 14.6 | 15.75 | 0 | 8.2 | A | A | A | B |
| Embodiment 77 | 12.5 | 2.1 | 15.7 | 0.05 | 14.6 | 15.75 | 0 | 9.7 | A | A | A | B |
| Embodiment 78 | 12.5 | 2.1 | 15.7 | 0.05 | 14.6 | 15.75 | 0 | 10 | A | B | A | B |
| Embodiment 79 | 12.5 | 2.1 | 15.7 | 0.05 | 14.6 | 15.75 | 1.8 | 3.2 | A | A | A | A |
| Embodiment 80 | 12.5 | 2.1 | 15.7 | 0.05 | 14.6 | 15.75 | 2.1 | 4.8 | A | A | A | A |
| Embodiment 81 | 12.5 | 2.1 | 15.7 | 0.05 | 14.6 | 15.75 | 3.2 | 5.2 | A | A | A | A |
| Embodiment 82 | 12.5 | 2.1 | 15.7 | 0.05 | 14.6 | 15.75 | 4.3 | 3.5 | A | A | A | A |
| Embodiment 83 | 12.5 | 2.1 | 15.7 | 0.05 | 14.6 | 15.75 | 4.7 | 3.8 | A | A | A | A |
| Embodiment 84 | 12.5 | 2.1 | 15.7 | 0.05 | 14.6 | 15.75 | 5.1 | 4.2 | A | A | A | A |
| Embodiment 85 | 12.5 | 2.1 | 15.7 | 0.05 | 14.6 | 15.75 | 5.9 | 4.9 | A | A | A | A |
| Embodiment 86 | 12.5 | 2.1 | 15.7 | 0.05 | 14.6 | 15.75 | 6.2 | 5.1 | A | A | A | A |
| Embodiment 87 | 12.5 | 2.1 | 15.7 | 0.05 | 14.6 | 15.75 | 6.8 | 5.9 | A | A | A | A |
| Embodiment 88 | 12.5 | 2.1 | 15.7 | 0.05 | 14.6 | 15.75 | 7.1 | 6.2 | A | A | A | A |
| Embodiment 89 | 12.5 | 2.1 | 15.7 | 0.05 | 14.6 | 15.75 | 3.6 | 6.7 | A | A | A | A |
| Embodiment 90 | 12.5 | 2.1 | 15.7 | 0.05 | 14.6 | 15.75 | 3.8 | 7.1 | A | A | A | A |
| Embodiment 91 | 12.5 | 2.1 | 15.7 | 0.05 | 14.6 | 15.75 | 2.4 | 7.8 | A | A | A | A |
| Embodiment 92 | 12.5 | 2.1 | 15.7 | 0.05 | 14.6 | 15.75 | 1.9 | 8 | A | A | A | A |
| Embodiment 93 | 12.5 | 2.1 | 15.7 | 0.05 | 14.6 | 15.75 | 1.6 | 8.6 | A | A | A | A |
| Embodiment 94 | 12.5 | 2.1 | 15.7 | 0.05 | 14.6 | 15.75 | 1.2 | 0.7 | A | A | A | A |
| Embodiment 95 | 12.5 | 2.1 | 15.7 | 0.05 | 14.6 | 15.75 | 0.8 | 0.3 | A | A | A | A |
| Embodiment 96 | 12.5 | 2.1 | 15.7 | 0.05 | 14.6 | 15.75 | 4.1 | 3.2 | A | A | A | A |
| Embodiment 97 | 12.5 | 2.1 | 15.7 | 0.05 | 14.6 | 15.75 | 3.5 | 4.8 | A | A | A | A |
| Comparative Embodiment 1 | 7.9 | 2.1 | 15.7 | 0.05 | 10 | 15.75 | 0 | 0 | D | D | C | D |
| Comparative Embodiment 2 | 21 | 2 | 15.7 | 0.05 | 23 | 15.75 | 0 | 0 | D | D | D | D |
| Comparative Embodiment 3 | 12.5 | 0.6 | 15.7 | 0.05 | 13.1 | 15.75 | 0 | 0 | D | C | D | D |

(continued)

| | a1 | a3 | a2 | a4 | al+a3 | a2+a4 | b | c | Volume resistance | Lithium plating rate | Low-temperature output | High-temperature cycling |
|---|---|---|---|---|---|---|---|---|---|---|---|---|
| Comparative Embodiment 4 | 12.5 | 5.1 | 15.7 | 0.05 | 17.6 | 15.75 | 0 | 0 | D | D | D | D |
| Comparative Embodiment 5 | 12.5 | 2.1 | 7.95 | 0.05 | 14.6 | 8 | 0 | 0 | D | D | D | C |
| Comparative Embodiment 6 | 12.5 | 2.1 | 21 | 0.05 | 14.6 | 21.05 | 0 | 0 | D | C | D | D |
| Comparative Embodiment 7 | 12.5 | 2.1 | 15.7 | 0.008 | 14.6 | 15.71 | 0 | 0 | D | D | D | D |
| Comparative Embodiment 8 | 12.5 | 2.1 | 15.7 | 3.1 | 14.6 | 17.7 | 0 | 0 | D | D | C | D |

When the nonaqueous electrolyte solution contains the ethylene carbonate at a mass percentage of 8 wt% to 20 wt%, the propylene carbonate at a mass percentage of 8 wt% to 20 wt%, the 1,2,3-tris(2-cyanoethoxy)propane at a mass percentage of 0.7 wt% to 5 wt%, the boron-containing lithium salt additive at a mass percentage of 0.01 wt% to 3 wt%, and the aggregate mass percentage of the ethylene carbonate and the 1,2,3-tris(2-cyanoethoxy)propane is 10.5 wt% to 22.5 wt%, and the aggregate mass percentage of the propylene carbonate and the boron-containing lithium salt additive is 8.05 wt% to 20.05 wt%, not only the volume resistance of the positive electrode and the lithium plating on the negative electrode of the lithium-ion battery can be alleviated, but also the high-temperature cycling performance and the low-temperature output performance of the battery can be well exerted in a balanced manner.

Especially, when the nonaqueous electrolyte solution further includes other nitrile compounds, other nitrile compounds can reduce the impedance of the coating formed by the reaction between the above-mentioned materials (I) to (IV) and the active species on the surface of the positive electrode, facilitate the charge transfer of lithium ions, and improve the resistance performance during high-temperature cycling and the low-temperature performance.

Especially, when the nonaqueous electrolyte solution further includes other additives. The applicant hereof has also unexpectedly discovered that other additives can suppress the decomposition and regeneration of the coating during charging and discharging, where the coating is formed by the reaction between the above-mentioned materials (I) to (IV) and the active species on the surface of the positive electrode, thereby further reducing the resistance during high-temperature cycling and improving the low-temperature performance.

References to "embodiments", "some embodiments", "an embodiment", "another example", "example", "specific example" or "some examples" throughout the specification mean that specified features, structures, materials, or characteristics described in such embodiment(s) or example(s) are included in at least one embodiment or example in this application. Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. A nonaqueous electrolyte solution, comprising a nonaqueous solvent and a lithium salt; **characterized in that**,

   the nonaqueous electrolyte solution comprises ethylene carbonate, propylene carbonate, 1,2,3-tris(2-cyanoethoxy)propane, and boron-containing lithium salt additive;
   based on a total mass of the nonaqueous electrolyte solution,
   a mass percentage of the ethylene carbonate is 8 wt% to 20 wt%,
   a mass percentage of the propylene carbonate is 8 wt% to 20 wt%,
   a mass percentage of the 1,2,3-tris(2-cyanoethoxy)propane is 0.7 wt% to 5 wt%, and
   a mass percentage of the boron-containing lithium salt additive is 0.01 wt% to 3 wt%;
   wherein an aggregate mass percentage of the ethylene carbonate and the 1,2,3-tris(2-cyanoethoxy)propane is 10.5 wt% to 22.5 wt%, and an aggregate mass percentage of the propylene carbonate and the boron-containing lithium salt additive is 8.05 wt% to 20.05 wt%.

2. The nonaqueous electrolyte solution according to claim 1, **characterized in that** the boron-containing lithium salt additive comprises at least one selected from the group consisting of lithium tetrafluoroborate, lithium difluoro(oxalato)borate, lithium bis(oxalato)borate, lithium tetracyanoborate, lithium tetrakis(trifluoromethyl)borate, lithium (trifluoromethyl)trifluoroborate, lithium bis(trifluoromethyl)difluoroborate, lithium pentafluoroethyl trifluoroborate, lithium dicyano(oxalato)borate, lithium bismalonate borate, lithium (2-fluoromalonate)difluoroborate, lithium malonate(oxalato)borate, lithium bis(salicylate)borate, lithium bis(catecholato)borate, lithium methoxytricyanoborate, lithium ethoxytricyanoborate, lithium tetramethoxyborate, lithium tetraethoxyborate, lithium tetrakis(trifluoromethoxy)borate, lithium tetrakis(2,2,2-trifluoroethoxy)borate, lithium tetra(hydroquinone-oxy)borate, dilithium bis(trifluoroborate)sulfate, lithium difluoroborate, lithium methanedisulfonate difluoroborate, lithium difluorophosphoryloxy trifluoroborate, lithium bis(difluorophosphoryloxy)difluoroborate, and lithium tetrakis(difluorophosphoryloxy)borate.

3. The nonaqueous electrolyte solution according to claim 1 or 2, **characterized in that**, based on the total mass of the nonaqueous electrolyte solution, the mass percentage of the ethylene carbonate is 8.5 wt% to 17 wt%; or, the mass percentage of the 1,2,3-tris(2-cyanoethoxy)propane is 0.8 wt% to 4.1 wt%; or, the aggregate mass percentage of the ethylene carbonate and the 1,2,3-tris(2-cyanoethoxy)propane is 11 wt% to 20.5 wt%.

4. The nonaqueous electrolyte solution according to any one of claims 1-3, **characterized in that**, based on the total mass of the nonaqueous electrolyte solution, the mass percentage of the ethylene carbonate is 10.5 wt% to 19 wt%; or, the mass percentage of the 1,2,3-tris(2-cyanoethoxy)propane is 1.2 wt% to 3.6 wt%; or, the aggregate mass percentage of the ethylene carbonate and the 1,2,3-tris(2-cyanoethoxy)propane is 11.5 wt% to 21.5 wt%.

5. The nonaqueous electrolyte solution according to any one of claims 1-4, **characterized in that**, based on the total mass of the nonaqueous electrolyte solution, the mass percentage of the ethylene carbonate is 11.5 wt% to 17 wt%; or, the mass percentage of the 1,2,3-tris(2-cyanoethoxy)propane is 1.2 wt% to 2.7 wt%; or, the aggregate mass percentage of the ethylene carbonate and the 1,2,3-tris(2-cyanoethoxy)propane is 13 wt% to 19.5 wt%.

6. The nonaqueous electrolyte solution according to any one of claims 1-5, **characterized in that**, based on the total mass of the nonaqueous electrolyte solution, the mass percentage of the propylene carbonate is 8.5 wt% to 17.8 wt%; or, the mass percentage of the boron-containing lithium salt additive is 0.03 wt% to 2.5 wt%; or, the aggregate mass percentage of the propylene carbonate and the boron-containing lithium salt additive is 8.55 wt% to 19.55 wt%.

7. The nonaqueous electrolyte solution according to any one of claims 1-6, **characterized in that**, based on the total mass of the nonaqueous electrolyte solution, the mass percentage of the propylene carbonate is 10.7 wt% to 18.9 wt%; or, the mass percentage of the boron-containing lithium salt additive is 0.05 wt% to 1.8 wt%; or, the aggregate mass percentage of the propylene carbonate and the boron-containing lithium salt additive is 10.75 wt% to 20.05 wt%.

8. The nonaqueous electrolyte solution according to any one of claims 1-7, **characterized in that**, based on the total mass of the nonaqueous electrolyte solution, the mass percentage of the propylene carbonate is 12.9 wt% to 18.9 wt%; or, the mass percentage of the boron-containing lithium salt additive is 0.12 wt% to 1.8 wt%; or, the aggregate mass percentage of the propylene carbonate and the boron-containing lithium salt additive is 13.65 wt% to 20.05 wt%.

9. The nonaqueous electrolyte solution according to any one of claims 1-8, **characterized in that** the nonaqueous electrolyte solution further comprises other nitrile compounds; and the other nitrile compounds comprise at least one selected from the group consisting of succinonitrile, adiponitrile, ethylene glycol bis(propionitrile)ether, 1,3,5-pentanetricarbonitrile, 1,2,3-propanetricarbonitrile, 1,3,6-hexanetricarbonitrile, 1,2,6-hexanetricarbonitrile, 1,2,4-tris(2-cyanoethoxy)butane, 1,1,1-tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, and 1,2,5-tris(cyanoethoxy)pentane; and
based on the total mass of the nonaqueous electrolyte solution, a mass percentage of the other nitrile compounds is 0.3 wt% to 8 wt%.

10. The nonaqueous electrolyte solution according to claim 9, **characterized in that**, based on the total mass of the nonaqueous electrolyte solution, the mass percentage of the other nitrile compounds is 0.6 wt% to 7.1 wt%; or
the other nitrile compounds comprise succinonitrile and adiponitrile; or, the other nitrile compounds comprise succinonitrile and ethylene glycol bis(propionitrile)ether.

11. The nonaqueous electrolyte solution according to claim 9, **characterized in that**, based on the total mass of the nonaqueous electrolyte solution, the mass percentage of the other nitrile compounds is 1.4 wt% to 6.2 wt%; or
the other nitrile compounds comprise adiponitrile and ethylene glycol bis(propionitrile)ether; or, the other nitrile compounds comprise succinonitrile and 1,3,6-hexanetricarbonitrile; or, the other nitrile compounds comprise adiponitrile and 1,3,6-hexanetricarbonitrile; or, the other nitrile compounds comprise ethylene glycol bis(propionitrile)ether and 1,3,6-hexanetricarbonitrile.

12. The nonaqueous electrolyte solution according to any one of claims 1-11, **characterized in that** the nonaqueous electrolyte solution further comprises other additives; and the other additives comprise at least one selected from the group consisting of fluoroethylene carbonate, vinylene carbonate, lithium difluorophosphate, lithium fluorosulfonate, 1,3-propane sultone, 1,3-propene sultone, ethylene sulfate, 1,3-propylene glycol cyclosulfate, fluorobenzene, cyclohexylbenzene, biphenyl, tris(trimethylsilyl)phosphate, and tris(trimethylsilyl)borate; and
based on the total mass of the nonaqueous electrolyte solution, a mass percentage of the other additives is 0.3 wt% to 10 wt%.

**13.** The nonaqueous electrolyte solution according to claim 12, **characterized in that**, based on the total mass of the nonaqueous electrolyte solution, the mass percentage of the other additives is 0.9 wt% to 4.6 wt%.

**14.** The nonaqueous electrolyte solution according to claim 12, **characterized in that**, based on the total mass of the nonaqueous electrolyte solution, the mass percentage of the other additives is 5.3 wt% to 8.2 wt%.

**15.** A lithium-ion battery, comprising: a positive electrode, a negative electrode, and a nonaqueous electrolyte solution according to any one of claims 1 to 14; wherein the nonaqueous electrolyte solution comprises an electrolyte salt dissolved in a nonaqueous solvent; **characterized in that**,

the positive electrode comprises lithium cobalt oxide containing at least three elements selected from the group consisting of aluminum, magnesium, titanium, zirconium, lanthanum, iridium, cerium, and tungsten; or, the negative electrode comprises a negative active material, the negative active material comprises at least one selected from the group consisting of lithium metal, a lithium alloy, a lithiation- and delithiation-enabled carbon material, elemental tin, a tin compound, elemental silicon, a silicon oxygen compound, a silicon carbon compound, and a lithium titanium oxide compound.

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 25 16 4454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 115 882 073 A (AMPEREX TECH LTD) 31 March 2023 (2023-03-31) * 90, claims 1, 3, 8, 9, table 1, table 2 * * 12, claim 5) discloses the additional use of lithium difluorophosphate * * the whole document * | 1-15 | INV. H01M10/0525 H01M10/0567 H01M10/0568 H01M10/0569 H01M4/02 H01M4/525 |
| Y | EP 4 210 131 A2 (SK ON CO LTD [KR]) 12 July 2023 (2023-07-12) * 99; example 1 * * the whole document * | 1-15 | |
| A | EP 4 310 976 A1 (ZHANGJIAGANG GUOTAI HUARONG NEW CHEMICAL MATERIALS CO LTD [CN]) 24 January 2024 (2024-01-24) * embodiment 1 * * the whole document * | 1-15 | |
| A | US 2019/296398 A1 (BURKHARDT STEPHEN E [US] ET AL) 26 September 2019 (2019-09-26) * example 1 * * the whole document * ----- -/-- | 1-15 | TECHNICAL FIELDS SEARCHED (IPC) H01M |

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| The Hague | 29 October 2025 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

# PARTIAL EUROPEAN SEARCH REPORT

**Application Number**

**EP 25 16 4454**

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | CN 114 976 245 A (ZHANGJIAGANG GUOTAI HUARONG NEW CHEMICAL MATERIALS CO LTD) 30 August 2022 (2022-08-30) * example 1 ( 32) claim 6: 1,2,3-tris(2-cyanoethoxy)propane * * the whole document * ----- | 1-15 | |
| A | CN 114 122 518 A (PEARL HUAI GIAU BATTERY CO LTD) 1 March 2022 (2022-03-01) * claims 1,5,9 * * the whole document * ----- | 1-15 | |

| TECHNICAL FIELDS SEARCHED (IPC) |
|---|
| |

EPO FORM 1503 03.82 (P04C10)

Europäisches
Patentamt

European
Patent Office

Office européen
des brevets

**INCOMPLETE SEARCH
SHEET C**

Claim(s) completely searchable:
-

Claim(s) searched incompletely:
1-15

Reason for the limitation of the search:

Subject matter to be searched The applicant was invited in a clarification request under Rule 63(1) EPC to indicate the subject matter to be searched. The applicant did not indicate any subject matter to be searched.Consequently, the search report has preen drawn up on the basis of the first option mentioned in the clarification request (Rule 63 EPC and Guidelines B-VIII, 3), which is here reproduced for the sake of convenience:The search division has interpreted claim 1 as follows:A nonaqueous electrolyte solution, comprising a) a nonaqueous solvent b) a lithium saltc) 8-20 wt.% of ethylene carbonated) 8-20 wt.% of propylene carbonatee) 0.7-5 wt.% of 1,2,3-tris(2-cyanoethoxy)propanef) 0.01-3 wt.% of boron-containing lithium salt additiveand wherein g) the aggregate mass percentage of the ethylene carbonate and the 1,2,3-tris(2-cyanoethoxy)propane is 10.5 wt% to 22.5 wt%, and wherein h) the aggregate mass percentage of the propylene carbonate and the boron-containing lithium salt additive is 8.05 wt% to 20.05 wt%.The applicant/s will have to confirm upon entering the examination phase that these elected claims should be the basis for the examination.

## ANNEX TO THE EUROPEAN SEARCH REPORT
## ON EUROPEAN PATENT APPLICATION NO.

EP 25 16 4454

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | | Publication date | Patent family member(s) | | Publication date |
|---|---|---|---|---|---|
| CN 115882073 | A | 31-03-2023 | CN | 115882073 A | 31-03-2023 |
| | | | EP | 4421939 A1 | 28-08-2024 |
| | | | US | 2025323324 A1 | 16-10-2025 |
| | | | WO | 2024139417 A1 | 04-07-2024 |
| EP 4210131 | A2 | 12-07-2023 | CN | 116454223 A | 18-07-2023 |
| | | | DE | 202022003149 U1 | 06-02-2025 |
| | | | EP | 4210131 A2 | 12-07-2023 |
| | | | KR | 20230107016 A | 14-07-2023 |
| | | | US | 2023223530 A1 | 13-07-2023 |
| EP 4310976 | A1 | 24-01-2024 | CN | 116154281 A | 23-05-2023 |
| | | | EP | 4310976 A1 | 24-01-2024 |
| | | | US | 2024387870 A1 | 21-11-2024 |
| | | | WO | 2023087648 A1 | 25-05-2023 |
| US 2019296398 | A1 | 26-09-2019 | CN | 109792083 A | 21-05-2019 |
| | | | CN | 117438649 A | 23-01-2024 |
| | | | EP | 3485527 A2 | 22-05-2019 |
| | | | JP | 7005587 B2 | 21-01-2022 |
| | | | JP | 2019521494 A | 25-07-2019 |
| | | | KR | 20190028500 A | 18-03-2019 |
| | | | US | 2019296398 A1 | 26-09-2019 |
| | | | WO | 2018011062 A2 | 18-01-2018 |
| CN 114976245 | A | 30-08-2022 | CN | 114976245 A | 30-08-2022 |
| | | | WO | 2023241349 A1 | 21-12-2023 |
| CN 114122518 | A | 01-03-2022 | NONE | | |

EPO FORM P0459

For more details about this annex : see Official Journal of the European Patent Office, No. 12/82